# EUROPÄISCHE PATENTANMELDUNG

(11) **EP 3 909 807 A1**
(43) Veröffentlichungstag der Anmeldung: **17.11.2021**
(21) Anmeldenummer: 20173875.4
(22) Anmeldetag: 11.05.2020
(51) Int. Cl.: B60N 3/02, E06C 7/18, E06C 5/02, B60R 3/02, B60P 3/22

(54) **FAHRZEUG**

(71) Anmelder: Schmitz Cargobull AG, 48341 Altenberge (DE)
(72) Erfinder: Gerling, Manfred, 48683 Ahaus (DE)
(74) Vertreter: Liedtke & Partner Patentanwälte

(57) **Zusammenfassung**

Die Erfindung betrifft ein Fahrzeug (1), umfassend einen Fahrzeugaufbau (2) mit einem Ladebereich (B), welcher an einer Unterseite von einem Ladeboden (3) begrenzt ist und zumindest einer Leiter (9), welche aus einer Nichtgebrauchsstellung in eine Gebrauchsstellung überführbar ist, in welcher diese einen Aufstieg von einem Untergrund, auf welchem sich das Fahrzeug befindet, auf den Ladeboden (3) ermöglicht. Erfindungsgemäß umfasst der Fahrzeugaufbau (2) zumindest einen Haltegriff (11), welcher aus einer Nichtgebrauchsstellung in eine Gebrauchsstellung überführbar ist, sowie eine Haltegriff-Befestigungsstruktur (11.1), welche in der Gebrauchsstellung mittels der Haltegriff-Befestigungsstruktur (11.1) randseitig an dem Ladeboden (3) in einem durch den Aufstiegsbereich der Leiter (9) in seiner Position vorgegebenen Einstiegsbereich zum Ladebereich (B) an einer mit der Haltegriff-Befestigungsstruktur (11.1) korrelierenden Fahrzeugaufbau-Befestigungsstruktur (12) des Fahrzeugaufbaus (2) befestigbar ist.

## Beschreibung

Die Erfindung betrifft ein Fahrzeug gemäß dem Oberbegriff des Anspruchs 1.

Die EP 3 156 279 A1 beschreibt ein Fahrzeug für einen Transport von Transportgütern mit einem Chassis, das ein einer Fahrzeugrückseite zugeordnetes Bauteil umfasst und an seiner Oberseite einen Ladeboden trägt, auf dem ein jeweiliges Transportgut abstellbar ist. An dem Chassis ist zusätzlich eine unterhalb des Ladebodens angeordnete Ausziehleiter vorgesehen. Diese ist an einer ebenfalls von dem Chassis getragenen Führung verschiebbar gelagert, um die Ausziehleiter aus einer Aufbewahrungsstellung, in der sie sich unterhalb des Ladebodens befindet, in eine Gebrauchsstellung zu bringen, in der sie zum Untergrund, auf dem das Fahrzeug steht, geklappt ist, um einen Aufstieg auf den Ladeboden zu ermöglichen.

Der Erfindung liegt die Aufgabe zu Grunde, ein gegenüber dem Stand der Technik verbessertes Fahrzeug anzugeben.

Die Aufgabe wird erfindungsgemäß gelöst durch ein Fahrzeug, welches die im Anspruch 1 angegebenen Merkmale aufweist.

Vorteilhafte Ausgestaltungen der Erfindung sind Gegenstand der Unteransprüche.

Ein Fahrzeug umfasst einen Fahrzeugaufbau mit einem Ladebereich, welcher an einer Unterseite von einem Ladeboden begrenzt ist, und mit zumindest einer Leiter, welche aus einer Nichtgebrauchsstellung in eine Gebrauchsstellung überführbar ist. In dieser Gebrauchsstellung ermöglicht die Leiter einen Aufstieg von einem Untergrund, auf welchem sich das Fahrzeug befindet, auf den Ladeboden.

Erfindungsgemäß umfasst der Fahrzeugaufbau zumindest einen Haltegriff, welcher aus einer Nichtgebrauchsstellung in eine Gebrauchsstellung überführbar ist und eine Haltegriff-Befestigungsstruktur umfasst. Der Haltegriff ist in der Gebrauchsstellung mittels der Haltegriff-Befestigungsstruktur randseitig an dem Ladeboden in einem durch den Aufstiegsbereich der Leiter in seiner Position vorgegebenen Einstiegsbereich zum Ladebereich an einer mit der Haltegriff-Befestigungsstruktur korrelierenden Fahrzeugaufbau-Befestigungsstruktur des Fahrzeugaufbaus befestigbar.

Mittels dieses im Einstiegsbereich befestigbaren Haltegriffs, kann auch bei einer Anordnung der Leiter in einem Bereich am Fahrzeugaufbau, von welchem aus ein Greifen eines Nutzers an eine als Haltegriff geeignete Struktur des Fahrzeugaufbaus aufgrund eines zu großen Abstands nicht möglich ist, eine Haltemöglichkeit für den Nutzer bei einem Aufstieg auf den Ladeboden und einen Abstieg vom Ladeboden über die Leiter im Einstiegsbereich sichergestellt werden. Somit ist eine Sicherheit des Nutzers bei einem solchen Aufstieg oder Abstieg signifikant erhöht. Beispielsweise können so ein sicherer Auf- und Abstieg bei einer Leiter, welche mittig zwischen zwei Fahrzeugwänden, die sich außerhalb eines Zugriffsbereichs eines auf der Leiter befindlichen Nutzers befinden, sichergestellt werden. Eine solche Anordnung ist beispielsweise bei einem Fahrzeugaufbau an einem Heck, einer Seite und/oder einer Front möglich.

In einer möglichen Ausgestaltung des Fahrzeugs umfasst die Fahrzeugaufbau-Befestigungsstruktur zumindest ein zur Befestigung der Haltegriff-Befestigungsstruktur ausgebildetes Verriegelungselement, welches zu einer Verriegelung zumindest einer Fahrzeugtür ausgebildet ist. Mittels der Fahrzeugtür ist insbesondere eine Öffnung des Fahrzeugaufbaus verschließbar, in welcher der Einstiegsbereich bei geöffneter Fahrzeugtür ausgebildet ist. Dadurch, dass zumindest ein zur Verriegelung der Fahrzeugtür vorgesehenes und bei geöffneter Fahrzeugtür frei zugängliches Verriegelungselement zur Befestigung des Haltegriffs verwendet werden kann, ist kein zusätzliches Element zur Bildung der Fahrzeugaufbau-Befestigungsstruktur erforderlich. Dies ermöglicht eine Material-, Aufwands-, Gewichts- und Kostenreduzierung.

In einer weiteren möglichen Ausgestaltung des Fahrzeugs ist das Verriegelungselement ein Bundbolzen, welcher Bestandteil einer Drehstangenverriegelung der Fahrzeugtür ist. An einem solchen Bundbolzen ist in einfacher Weise eine sichere und stabile Befestigung einer entsprechend ausgebildeten Haltegriff-Befestigungsstruktur möglich. Beispielsweise umfasst die Haltegriff-Befestigungsstruktur hierzu zumindest eine Aussparung, welche in einer Position die Aufnahme des Bundbolzens ermöglicht und in einer weiteren Position den Bundbolzen in der Art einer Pilzkopfverriegelung sichert. Beispielsweise ist die Aussparung in der Form eines Schlüssellochs ausgebildet, welches in unterschiedlichen Bereichen unterschiedliche Breiten aufweist. Auch kann die Aussparung eine andere Ausformung aufweisen, welche geeignet ist, den Bundbolzen in einer Position einzuführen und in zumindest einer weiteren Position sicher zu halten.

In einer weiteren möglichen Ausgestaltung des Fahrzeugs umfasst die Fahrzeugaufbau-Befestigungsstruktur eine randseitig am Ladeboden, von dessen Oberseite nach unten verlaufende Materialaussparung, welche am Außenrand des Ladebodens von einem zumindest im Wesentlichen senkrecht zu einer Oberseite des Ladebodens, ausgehend von dieser nach unten verlaufenden plattenförmigen Abschnitt begrenzt ist. Dabei umfasst die Haltegriff-Befestigungsstruktur zumindest einen Befestigungshaken, welcher zur Befestigung an dem plattenförmigen Abschnitt ausgebildet ist. An einem solchen plattenförmigen Abschnitt ist der Befestigungshaken in einfacher Weise und sicher einhakbar. Beispielsweise ist die Materialaussparung zu einer Aufnahme einer Schlossverriegelung ausgebildet, in welchem ein an einem senkrecht nach oben und unten bewegbaren, zum Verschließen einer Öffnung des Fahrzeugaufbaus vorgesehenen Rolltor angeordnetes korrelierendes Verriegelungselement in der geschlossen Position des Rolltors verriegelt ist.

In einer weiteren möglichen Ausgestaltung des Fahrzeugs umfasst die Haltegriff-Befestigungsstruktur zusätzlich zu dem Befestigungshaken einen Befestigungsabschnitt zu einer Befestigung an einem Verriegelungselement der Fahrzeugaufbau-Befestigungsstruktur, wobei das Verriegelungselement zur Verriegelung zumindest einer Fahrzeugtür ausgebildet ist. In dieser Ausgestaltung ist der Haltegriff sowohl zu einer Befestigung an einem die Materialaussparung begrenzenden plattenförmigen Abschnitt als auch an einem zu einer Fahrzeugtürverriegelung vorgesehenen Verriegelungselement ausgebildet und dadurch für unterschiedliche Anwendungsfälle anwendbar. Beispielsweise umfasst die Haltegriff-Befestigungsstruktur hierzu zusätzlich zumindest eine als Aussparung ausgebildete Haltegriff-Befestigungsstruktur, welche in einer Position die Aufnahme einer als Bundbolzen ausgebildeten Fahrzeugaufbau-Befestigungsstruktur ermöglicht und in einer weiteren Position den Bundbolzen sichert. Beispielsweise ist dabei die Aussparung in der Form eines Schlüssellochs ausgebildet, welches in unterschiedlichen Bereichen unterschiedliche Breiten aufweist.

In einer weiteren möglichen Ausgestaltung des Fahrzeugs umfasst der Befestigungshaken zwei sich zumindest im Wesentlichen parallel gegenüberliegende innere Hakenseitenabschnitte, deren Abstand zueinander geringfügig größer als eine Dicke des plattenförmigen Abschnitts ist und welche zu einer Anlage an Flachseiten des plattenförmigen Abschnitts ausgebildet sind. Weiterhin umfasst der Befestigungshaken einen einer Hakenöffnung gegenüberliegenden und zumindest im Wesentlichen senkrecht zu den Hakenseitenabschnitten verlaufenden inneren Hakenoberseitenabschnitt, welcher zu einer Anlage an einer oberen Stirnseite des plattenförmigen Abschnitts ausgebildet ist. Eine solche Ausbildung des Befestigungshakens ermöglicht eine besonders einfache, sichere und stabile Befestigung des Haltegriffs am Fahrzeugaufbau.

In einer weiteren möglichen Ausgestaltung des Fahrzeugs ist der Haltegriff in der Nichtgebrauchsstellung unterhalb des Ladebodens angeordnet, über eine am

Fahrzeugaufbau angeordnete Führungsstruktur ausziehbar und durch Ausziehen über die Grundfläche des Ladebodens hinaus und durch Schwenken nach oben um eine Schwenkachse sowie Befestigung an der Fahrzeugaufbau-Befestigungsstruktur in die Gebrauchsstellung überführbar. Eine solche Anordnung des Haltegriffs ermöglicht einerseits eine sichere Verstauung desselben in der Nichtgebrauchsposition und andererseits eine einfache Überführung desselben in die Gebrauchsposition. Dabei ist der Haltegriff verliersicher angeordnet und in besonders einfacher Weise handhabbar.

In einer weiteren möglichen Ausgestaltung des Fahrzeugs ist die Schwenkachse mittels eines Schwenklagers gebildet, welches im Bereich eines dem Fahrzeugaufbau zugewandten Endes des Haltegriffs zwischen diesem und einem Ende der Führungsstruktur, wenn der Haltegriff eine maximale Auszugsstellung aus der Führungsstruktur erreicht hat, ausgebildet ist. Hierdurch wird die Handhabung des Haltegriffs weiter vereinfacht und das Schwenklager bildet eine zusätzliche Sicherung eines unteren Endes des Haltegriffs in dessen Gebrauchsstellung.

In einer weiteren möglichen Ausgestaltung des Fahrzeugs ist die zumindest eine Leiter eine Ausziehleiter, welche in ihrer Nichtgebrauchsstellung in einer unterhalb des Ladebodens befindlichen Aufbewahrungsstellung angeordnet ist, über eine am Fahrzeugaufbau angeordnete Leiter-Führungsstruktur ausziehbar ist und durch Ausziehen aus der Aufbewahrungsstellung über eine Grundfläche des Ladebodens hinaus und Abklappen in die Gebrauchsstellung überführbar ist. Eine solche Ausbildung und Anordnung der Leiter ermöglicht einerseits eine sichere Verstauung derselben in der Aufbewahrungsstellung und andererseits eine einfache Überführung derselben in die Gebrauchsposition. Dabei ist die Leiter verliersicher angeordnet und in besonders einfacher Weise mit geringem Kraftaufwand handhabbar.

In einer weiteren möglichen Ausgestaltung des Fahrzeugs ist die Ausziehleiter durch Schwenken um eine Schwenkachse in die Gebrauchsstellung abklappbar, wobei die Schwenkachse mittels eines Schwenklagers gebildet ist, welches im Bereich eines dem Fahrzeugaufbau zugewandten Endes der Ausziehleiter zwischen diesem und einem Ende der Leiter-Führungsstruktur, wenn die Ausziehleiter eine maximale Auszugsstellung aus der Leiter-Führungsstruktur erreicht hat, ausgebildet ist. Hierdurch wird die Handhabung der Leiter weiter vereinfacht und das Schwenklager bildet eine zusätzliche Sicherung eines oberen Endes der Leiter in deren Gebrauchsstellung.

In einer weiteren möglichen Ausgestaltung des Fahrzeugs ist der Haltegriff schwenkbar an der Ausziehleiter befestigt und in der Nichtgebrauchsstellung unterhalb des Ladebodens angeordnet und durch Ausziehen mit der Ausziehleiter über die Grundfläche des Ladebodens hinaus und durch Schwenken nach oben um eine Schwenkachse sowie Befestigung an der Fahrzeugaufbau-Befestigungsstruktur in die Gebrauchsstellung überführbar. Diese Ausführung ermöglicht ein Ausziehen der Ausziehleiter gemeinsam mit dem Haltegriff und zeichnet sich durch eine besonders geringe Bauraumanforderung aus. Des Weiteren wird eine Handhabung der Leiter und des Haltegriffs weiter vereinfacht und eine Gefahr eines Versäumens der Anordnung und Nutzung des Haltegriffs in seiner Gebrauchsstellung durch einen Nutzer wird signifikant verringert. Des Weiteren kann eine ergonomisch besonders vorteilhafte Positionierung des Haltegriffs relativ zur Leiter realisiert werden.

In einer weiteren möglichen Ausgestaltung des Fahrzeugs ist die Fahrzeugaufbau-Befestigungsstruktur an der Ausziehleiter angeordnet. Auch hierdurch kann eine ergonomisch besonders vorteilhafte Positionierung des Haltegriffs relativ zur Leiter realisiert werden

In einer weiteren möglichen Ausgestaltung des Fahrzeugs umfasst der Haltegriff einen stangenförmigen Griffabschnitt. Ein solcher Griffabschnitt ist besonders einfach herstellbar und ermöglicht eine einfache und sichere Handhabung. Weiterhin ist der Haltegriff sehr einfach und mit geringem Platzbedarf im oder am Fahrzeugaufbau verstaubar.

In einer weiteren möglichen Ausgestaltung des Fahrzeugs verläuft der Griffabschnitt in der Gebrauchsstellung des Haltegriffs zumindest im Wesentlichen senkrecht zum Ladeboden und bildet somit einen weit reichenden und eine hohe Sicherheit aufweisenden Handlauf für einen Nutzer beim Auf- und Abstieg.

In einer weiteren möglichen Ausgestaltung des Fahrzeugs ist der Einstiegsbereich in einer Öffnung des Fahrzeugaufbaus ausgebildet, welche mit zumindest einer Plane und/oder einer Fahrzeugtür und/oder einem Rolltor des Fahrzeugaufbaus verschließbar ist.

In einer weiteren möglichen Ausgestaltung des Fahrzeugs umfasst der Fahrzeugaufbau einen Planenaufbau und/oder einen Kofferaufbau und/oder einen Kühlaufbau.

Ausführungsbeispiele der Erfindung werden im Folgenden anhand von Zeichnungen näher erläutert.

Darin zeigen:
- Figur 1: schematisch einen Ausschnitt einer perspektivischen Ansicht eines Fahrzeugs,
- Figur 2: schematisch einen vergrößerten Ausschnitt des Fahrzeugs gemäß Figur 1,
- Figur 3: schematisch einen Ausschnitt einer Draufsicht eines Heckbereichs des Fahrzeugs,
- Figur 4: schematisch einen Haltegriff für ein Fahrzeug,
- Figur 5: schematisch eine perspektivische Ansicht des Haltegriffs gemäß Figur 4,
- Figur 6: schematisch einen Ausschnitt einer perspektivischen Ansicht eines Fahrzeugs,
- Figur 7: schematisch einen vergrößerten Ausschnitt des Fahrzeugs gemäß Figur 6,
- Figur 8: schematisch einen Ausschnitt einer Seitenansicht des Haltegriffs gemäß Figur 4 und
- Figur 9: schematisch einen Ausschnitt einer perspektivischen Ansicht eines Fahrzeugs.

Einander entsprechende Teile sind in allen Figuren mit den gleichen Bezugszeichen versehen.

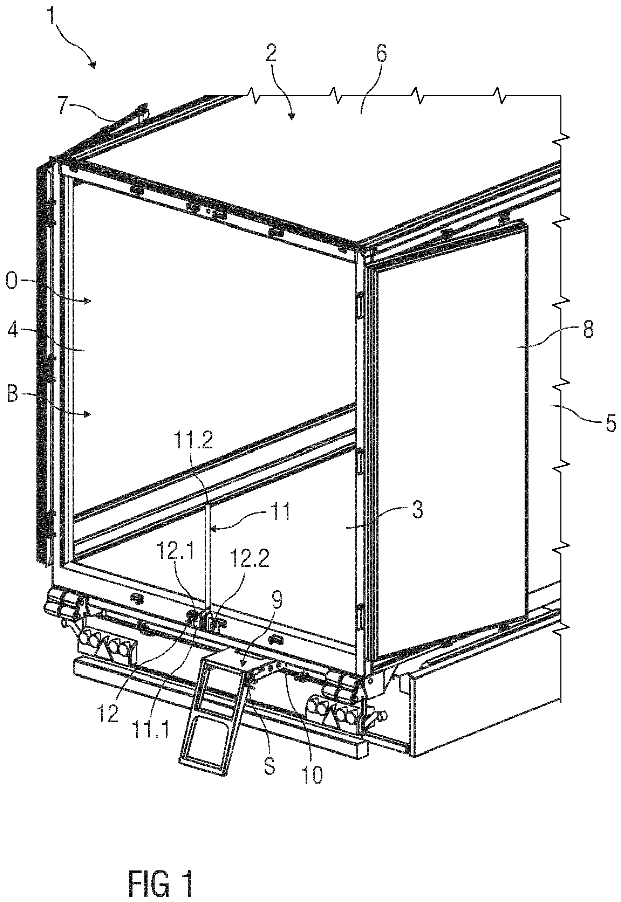

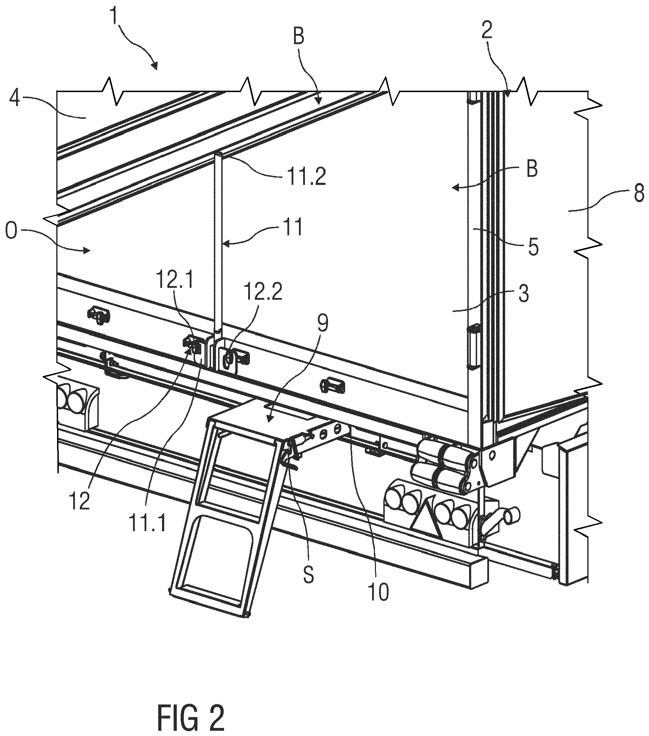

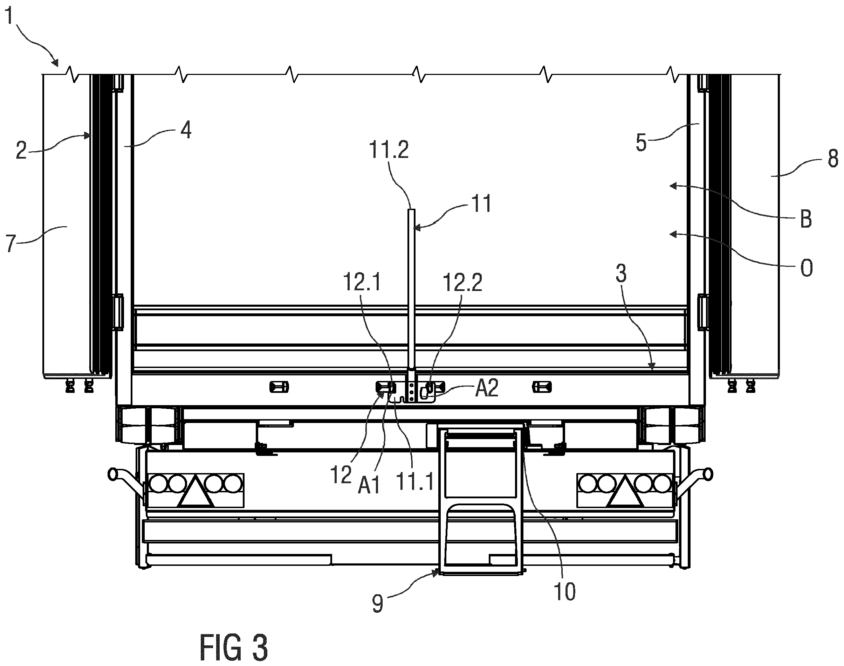

In **den** **Figuren 1** **und** **2** sind Ausschnitte einer perspektivischen Ansicht eines möglichen Ausführungsbeispiels eines Fahrzeugs 1 dargestellt. **Figur 3** zeigt einen Ausschnitt einer Draufsicht eines Heckbereichs des Fahrzeugs 1.

Das Fahrzeug 1 umfasst einen Fahrzeugaufbau 2 mit einem so genannten Kofferaufbau mit einem Ladebereich B, welcher an einer Unterseite von einem Ladeboden 3, seitlich von zwei festen Seitenwänden 4, 5, an einer Oberseite von einem festen Dach 6, an einem Frontbereich von einer nicht näher dargestellten Vorderwand und in einem geschlossenen Zustand von zwei im Heckbereich angeordneten Fahrzeugtüren 7, 8 begrenzt ist. Die Fahrzeugtüren 7, 8 sind im geöffneten Zustand dargestellt. Im geschlossenen Zustand verschließen die Fahrzeugtüren 7, 8 eine Öffnung O des Fahrzeugaufbaus 2, über welche ein Zutritt, eine Beladung und eine Entladung des Fahrzeugaufbaus 2 erfolgen können.

Dabei ist das Fahrzeug 1 als Anhänger, Auflieger oder motorisch betriebenes Fahrzeug 1, umfassend den Fahrzeugaufbau 2, ausgebildet. Der Fahrzeugaufbau 2 kann alternativ oder zusätzlich auch einen Planenaufbau und/oder einen Kühlaufbau umfassen.

Weiterhin kann die Öffnung O an einer anderen Position des Fahrzeugs 1, beispielsweise in einer der Seitenwände oder der Vorderwand ausgebildet sein. Auch kann das Fahrzeug 1 mehrere solcher Öffnungen O umfassen, welche beispielsweise mittels zumindest einer Fahrzeugtür 7, 8 verschließbar sind. In nicht näher dargestellten Ausführungsbeispielen ist die zumindest eine Öffnung O mit zumindest einer Plane und/oder einem Rolltor des Fahrzeugaufbaus 2 verschließbar.

Um einem Nutzer des Fahrzeugs 1 einen Einstieg in den Ladebereich B, das heißt auf den Ladeboden 3, zu ermöglichen, umfasst der Fahrzeugaufbau 2 eine Leiter 9, welche beispielsweise als Ausziehleiter gemäß der EP 3 156 279 A1 ausgebildet ist. Dabei ist die Leiter 9 in einer nicht gezeigten Nichtgebrauchsstellung in einer unterhalb des Ladebodens 3 befindlichen Aufbewahrungsstellung angeordnet und über eine am Fahrzeugaufbau 2 angeordnete Leiter-Führungsstruktur 10 ausziehbar. Durch Ausziehen der Leiter 9 aus der Aufbewahrungsstellung über eine Grundfläche des Ladebodens 3 hinaus und Abklappen ist die Leiter in eine Gebrauchsstellung überführbar, in welcher diese einen Aufstieg von einem Untergrund, auf welchem sich das Fahrzeug 1 befindet, auf den Ladeboden 3 ermöglicht.

Dabei ist die Leiter 9 durch Schwenken um eine Schwenkachse S in die Gebrauchsstellung abklappbar, wobei die Schwenkachse S mittels eines Schwenklagers gebildet ist, welches im Bereich eines dem Fahrzeugaufbau 2 zugewandten Endes der Leiter 9 zwischen diesem und einem Ende der Leiter-Führungsstruktur 10, wenn die Leiter 9 eine maximale Auszugsstellung aus der Leiter-Führungsstruktur 10 erreicht hat, ausgebildet ist.

Die Leiter 9 kann in nicht näher dargestellten anderen Ausführungsbeispielen auch eine andere Ausführung aufweisen, beispielsweise als Leiter 9, welche an einer frei wählbaren oder zumindest einer durch Befestigungsmöglichkeiten vorgegebenen Position befestigbar, beispielsweise einhängbar ist.

In der dargestellten Position der als Ausziehleiter ausgebildeten Leiter 9 ermöglicht diese einen Zugang zu dem Ladebereich B, auch wenn dieser in Randbereichen des Ladebodens 3 bereits mit Ladung befüllt ist. Jedoch ist in dieser Position für einen Nutzer ein Greifen an eine als Haltemöglichkeit geeignete Struktur des Fahrzeugaufbaus 2 aufgrund eines zu großen Abstands nicht möglich.

Um dem Nutzer dennoch für seinen Aufstieg und Abstieg über die Leiter 9 eine sichere Haltemöglichkeit zu bieten, umfasst der Fahrzeugaufbau 2 zumindest einen Haltegriff 11, welcher aus einer Nichtgebrauchsstellung in eine Gebrauchsstellung überführbar ist und eine Haltegriff-Befestigungsstruktur 11.1 umfasst. Mittels dieser Haltegriff-Befestigungsstruktur 11.1 ist der Haltegriff 11 in der dargestellten Gebrauchsstellung randseitig an dem Ladeboden 3 in einem durch einen Aufstiegsbereich der Leiter 9 in seiner Position vorgegebenen und in der Öffnung O ausgebildeten Einstiegsbereich zum Ladebereich B an einer mit der Haltegriff-Befestigungsstruktur 11.1 korrelierenden Fahrzeugaufbau-Befestigungsstruktur 12 des Fahrzeugaufbaus 2 befestigbar.

Dabei umfasst der Haltegriff 11 einen stangenförmigen Griffabschnitt 11.2, welcher in der Gebrauchsstellung des Haltegriffs 11 zumindest im Wesentlichen senkrecht zum Ladeboden 3 verläuft und somit einen Handlauf für den Nutzer bildet.

Die Fahrzeugaufbau-Befestigungsstruktur 12 umfasst im dargestellten Ausführungsbeispiel zwei zur Befestigung der Haltegriff-Befestigungsstruktur 11.1 ausgebildete Verriegelungselemente 12.1, 12.2, welche zu einer Verriegelung der Fahrzeugtüren 7, 8 ausgebildet sind. Dabei sind die Verriegelungselemente 12.1, 12.2 jeweils als eine Art Bundbolzen ausgebildet, welche Bestandteil einer Drehstangenverriegelung der Fahrzeugtüren 7, 8 sind.

Zu einer sicheren Befestigung des Haltegriffs 11 an der Fahrzeugaufbau-Befestigungsstruktur 12 umfasst die Haltegriff-Befestigungsstruktur 11.1 zwei Aussparungen A1, A2, welche in einer ersten Position die Aufnahme des jeweiligen Bundbolzens ermöglichen, wobei eine freie Öffnung der Aussparung A2 hierzu in einem linken Bereich größer ist, als eine Größe eines Bunds oder Kopfs des Bundbolzens. Die linke Aussparung A1 ist an ihrer linken Seite geöffnet zur Einführung eines Schafts des Bundbolzens ausgebildet. Weiterhin umfassen die Aussparungen A1, A2 jeweils einen rechten und oberhalb des jeweiligen linken Bereichs angeordneten Bereich, dessen freie Öffnung größer ist als ein Schaft des jeweiligen Bundbolzens, jedoch kleiner als der Bund oder Kopf.

Zur Befestigung des Haltegriffs 11 an dem Fahrzeugaufbau 2 wird der Schaft des linken Bundbolzens in die Aussparung A1 eingeführt und der rechte Bundbolzen wird mit seinem Bund oder Kopf durch den linken Bereich der rechten Aussparung A2 hindurchgeführt. Anschließend erfolgt eine Verschiebung der Haltegriff-Befestigungsstruktur 11.1 nach links und oben, so dass die Schäfte der Bundbolzen in den rechten Bereichen der Aussparungen A1, A2 angeordnet sind und die Bundbolzen mit ihrem Bund oder Kopf in der Art einer Pilzkopfverriegelung gesichert sind.

Auch können die Aussparungen A1, A2 in der Form eines Schlüssellochs ausgebildet sein, welches in unterschiedlichen Bereichen unterschiedliche Breiten aufweist. Auch können die Aussparungen A1, A2 eine andere Ausformung aufweisen, welche geeignet ist, den jeweiligen Bundbolzen in einer Position einzuführen und zumindest einer weiteren Position sicher zu halten.

In der Nichtgebrauchsstellung ist der Haltegriff 11 in einer beliebigen Position innerhalb oder außerhalb des Fahrzeugs 1 oder Fahrzeugaufbaus 2 anordbar und/oder verstaubar.

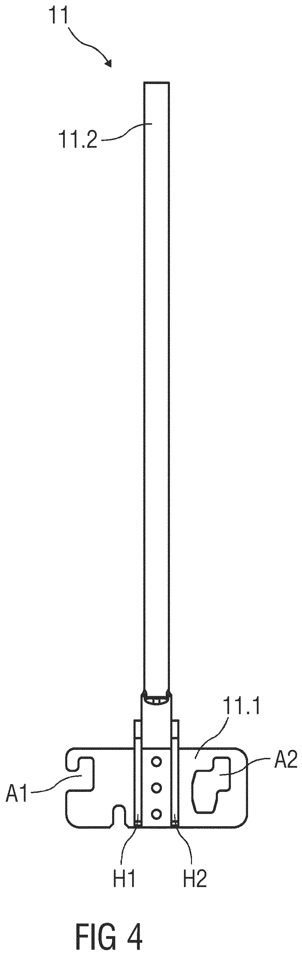

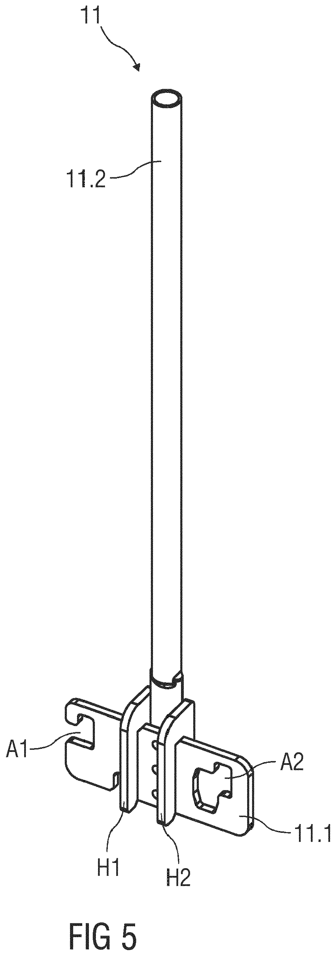

Die **Figuren 4** **und** **5** zeigen den Haltegriff 11 gemäß den Figuren 1 bis 3 in verschieden Ansichten.

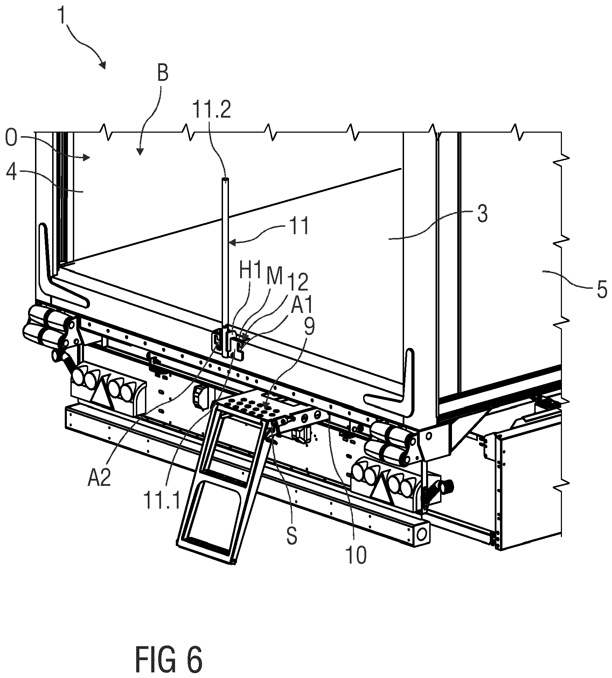

Zusätzlich zu den Aussparungen A1, A2 umfasst die Haltegriff-Befestigungsstruktur 11.1 zwei Befestigungshaken H1, H2, welche zu einer alternativen Befestigung des Haltegriffs 11 an einem in Figur 6 näher dargestellten plattenförmigen Abschnitt 12.3 einer alternativen Ausführungsform der Fahrzeugaufbau-Befestigungsstruktur 12 ausgebildet sind.

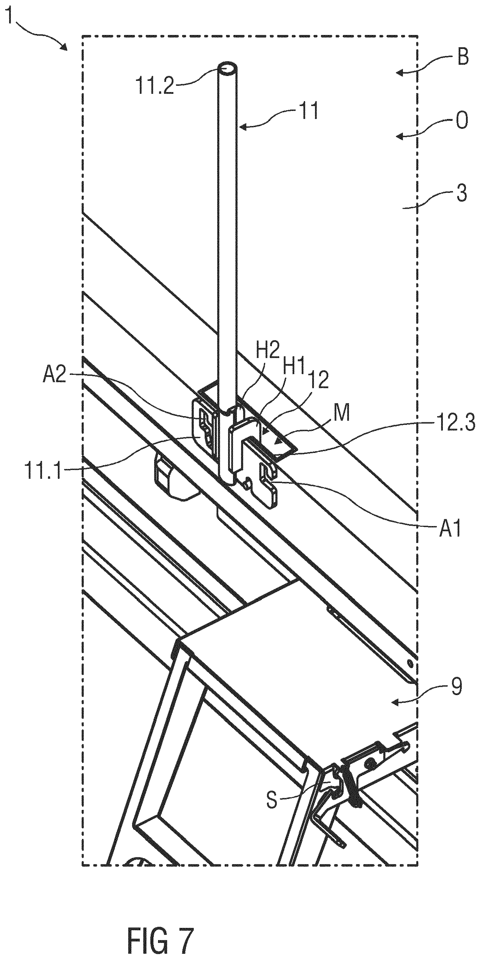

Die **Figuren 6** **und** **7** zeigen Ausschnitte einer perspektivischen Ansicht eines möglichen weiteren Ausführungsbeispiels eines Fahrzeugs 1. Im Unterschied zu dem in den Figuren 1 bis 3 dargestellten Ausführungsbeispiel umfasst der Fahrzeugaufbau 2 hierbei alternativ zu den Fahrzeugtüren 7, 8 ein nicht näher dargestelltes Rolltor zum Verschließen der Öffnung O, welches senkrecht nach oben und unten geführt werden kann.

Zur Anordnung einer fahrzeugaufbauseitigen Schlossverriegelung, in welcher im geschlossenen Zustand des Rolltors ein an diesem angeordnetes mit der Schlossverriegelung korrelierendes rolltorseitiges Verriegelungselement verriegelbar ist, umfasst der Fahrzeugaufbau 2 eine Materialaussparung M.

Diese Materialaussparung M ist Bestandteil der Fahrzeugaufbau-Befestigungsstruktur 12, ist randseitig am Ladeboden 3 angeordnet und verläuft von dessen Oberseite nach unten. Am Außenrand des Ladebodens 3 ist die Materialaussparung M von einem zumindest im Wesentlichen senkrecht zu einer Oberseite des Ladebodens 3, ausgehend von dieser nach unten verlaufenden plattenförmigen Abschnitt 12.3 begrenzt, in welchen die Befestigungshaken H1, H2 der Haltegriff-Befestigungsstruktur 11.1 von oben einhakbar sind.

Dabei weisen die Befestigungshaken H1, H2, wie in Figur 7 näher dargestellt, jeweils zwei sich zumindest im Wesentlichen parallel gegenüberliegende innere Hakenseitenabschnitte auf, deren Abstand zueinander geringfügig größer ist als eine Dicke des plattenförmigen Abschnitts 12.3 und welche zu einer Anlage an Flachseiten des plattenförmigen Abschnitts 12.3 ausgebildet sind. Weiterhin weisen die Befestigungshaken H1, H2 einen einer Hakenöffnung gegenüberliegenden und zumindest im Wesentlichen senkrecht zu den Hakenseitenabschnitten verlaufenden inneren Hakenoberseitenabschnitt auf, welcher zu einer Anlage an einer oberen Stirnseite des plattenförmigen Abschnitts 12.3 ausgebildet ist.

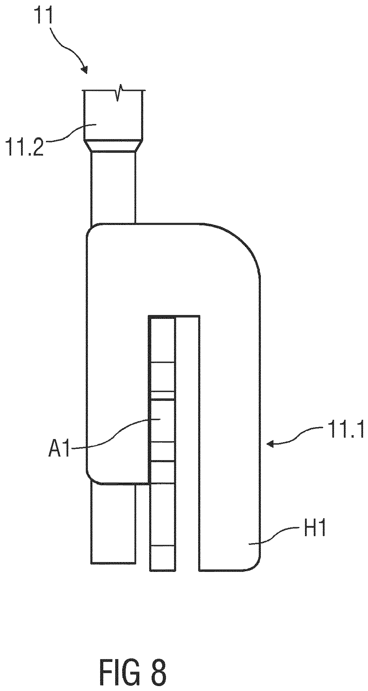

In **Figur 8** ist ein Ausschnitt einer Seitenansicht des Haltegriffs 11 im Bereich der Haltegriff-Befestigungsstruktur 11.1 dargestellt.

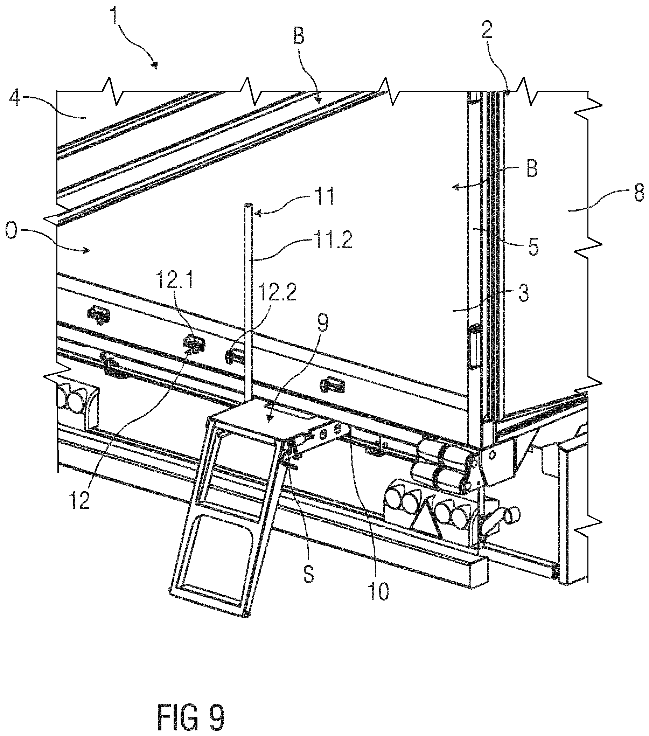

**Figur 9** zeigt einen Ausschnitt einer perspektivischen Ansicht eines möglichen weiteren Ausführungsbeispiels eines Fahrzeugs 1. Im Unterschied zu dem in den Figuren 1 bis 3 dargestellten Ausführungsbeispiel ist der Haltegriff schwenkbar an der als Ausziehleiter ausgebildeten Leiter 9 befestigt und in der Nichtgebrauchsstellung gemeinsam mit dieser unterhalb des Ladebodens 3 angeordnet. Durch gemeinsames Ausziehen mit der Leiter 9 über die Grundfläche des Ladebodens 3 hinaus und durch Schwenken nach oben um eine Schwenkachse sowie Befestigung an der Fahrzeugaufbau-Befestigungsstruktur 12 ist der Haltegriff in die Gebrauchsstellung überführbar. Dabei kann die Fahrzeugaufbau-Befestigungsstruktur 12 an der Leiter 9 ausgebildet sein.

In nicht näher dargestellten Ausführungsbeispielen ist der Haltegriff 11 in der Nichtgebrauchsstellung separat zu der Leiter unterhalb des Ladebodens 3 angeordnet und über eine am Fahrzeugaufbau 2 angeordnete nicht näher dargestellte separate Führungsstruktur ausziehbar und durch Ausziehen über die Grundfläche des Ladebodens 3 hinaus und durch Schwenken nach oben um eine Schwenkachse sowie Befestigung an der Fahrzeugaufbau-Befestigungsstruktur 12 in die Gebrauchsstellung überführbar.

Dabei kann die Schwenkachse mittels eines Schwenklagers gebildet sein, welches im Bereich eines dem Fahrzeugaufbau 2 zugewandten Endes des Haltegriffs 11 zwischen diesem und einem Ende der Führungsstruktur, wenn der Haltegriff 11 eine maximale Auszugsstellung aus der Führungsstruktur erreicht hat, ausgebildet ist.

### BEZUGSZEICHENLISTE

- 1: Fahrzeug
- 2: Fahrzeugaufbau
- 3: Ladeboden
- 4: Seitenwand
- 5: Seitenwand
- 6: Dach
- 7: Fahrzeugtür
- 8: Fahrzeugtür
- 9: Leiter
- 10: Leiter-Führungsstruktur
- 11: Haltegriff
- 11.1: Haltegriff-Befestigungsstruktur
- 11.2: Griffabschnitt
- 12: Fahrzeugaufbau-Befestigungsstruktur
- 12.1: Verriegelungselement
- 12.2: Verriegelungselement
- 12.3: Abschnitt

- A1: Aussparung
- A2: Aussparung
- B: Ladebereich
- H1: Befestigungshaken
- H2: Befestigungshaken
- M: Materialaussparung
- O: Öffnung
- S: Schwenkachse

## Patentansprüche

1. Fahrzeug (1), umfassend einen Fahrzeugaufbau (2) mit
- einem Ladebereich (B), welcher an einer Unterseite von einem Ladeboden (3) begrenzt ist und
- zumindest einer Leiter (9), welche aus einer Nichtgebrauchsstellung in eine Gebrauchsstellung überführbar ist, in welcher diese einen Aufstieg von einem Untergrund, auf welchem sich das Fahrzeug befindet, auf den Ladeboden (3) ermöglicht,
**dadurch gekennzeichnet, dass** der Fahrzeugaufbau (2) zumindest einen Haltegriff (11) umfasst, welcher
- aus einer Nichtgebrauchsstellung in eine Gebrauchsstellung überführbar ist,
- eine Haltegriff-Befestigungsstruktur (11.1) umfasst und
- in der Gebrauchsstellung mittels der Haltegriff-Befestigungsstruktur (11.1) randseitig an dem Ladeboden (3) in einem durch den Aufstiegsbereich der Leiter (9) in seiner Position vorgegebenen Einstiegsbereich zum Ladebereich (B) an einer mit der Haltegriff-Befestigungsstruktur (11.1) korrelierenden Fahrzeugaufbau-Befestigungsstruktur (12) des Fahrzeugaufbaus (2) befestigbar ist.

2. Fahrzeug (1) nach Anspruch 1,
**dadurch gekennzeichnet, dass** die Fahrzeugaufbau-Befestigungsstruktur (12) zumindest ein zur Befestigung der Haltegriff-Befestigungsstruktur (11.1) ausgebildetes Verriegelungselement (12.1, 12.2), welches zu einer Verriegelung zumindest einer Fahrzeugtür (7, 8) ausgebildet ist, umfasst.

3. Fahrzeug (1) nach Anspruch 2,
**dadurch gekennzeichnet, dass** das Verriegelungselement (12.1, 12.2) ein Bundbolzen ist, welcher Bestandteil einer Drehstangenverriegelung der Fahrzeugtür (7, 8) ist.

4. Fahrzeug (1) nach Anspruch 1,
**dadurch gekennzeichnet, dass**
- die Fahrzeugaufbau-Befestigungsstruktur (12) eine randseitig am Ladeboden (3), von dessen Oberseite nach unten verlaufende Materialaussparung (M) umfasst, welche am Außenrand des Ladebodens (3) von einem zumindest im Wesentlichen senkrecht zu einer Oberseite des Ladebodens (3), ausgehend von dieser nach unten verlaufenden plattenförmigen Abschnitt (12.3) begrenzt ist, und
- die Haltegriff-Befestigungsstruktur (11.1) zumindest einen Befestigungshaken (H1, H2) umfasst, welcher zur Befestigung an dem plattenförmigen Abschnitt (12.3) ausgebildet ist.

5. Fahrzeug (1) nach Anspruch 4,
**dadurch gekennzeichnet, dass** die Haltegriff-Befestigungsstruktur (11.1) zusätzlich einen Befestigungsabschnitt zu einer Befestigung an einem Verriegelungselement (12.1, 12.2) der Fahrzeugaufbau-Befestigungsstruktur (12) umfasst, wobei das
Verriegelungselement (12.1, 12.2) zur Verriegelung zumindest einer Fahrzeugtür (7, 8) ausgebildet ist.

6. Fahrzeug (1) nach Anspruch 4 oder 5,
**dadurch gekennzeichnet, dass** der Befestigungshaken (H1, H2)
- zwei sich zumindest im Wesentlichen parallel gegenüberliegende innere Hakenseitenabschnitte umfasst, deren Abstand zueinander geringfügig größer als eine Dicke des plattenförmigen Abschnitts (12.3) ist und welche zu einer Anlage an Flachseiten des plattenförmigen Abschnitts (12.3) ausgebildet sind, und
- einen einer Hakenöffnung gegenüberliegenden und zumindest im Wesentlichen senkrecht zu den Hakenseitenabschnitten verlaufenden inneren Hakenoberseitenabschnitt umfasst, welcher zu einer Anlage an einer oberen Stirnseite des plattenförmigen Abschnitts (12.3) ausgebildet ist.

7. Fahrzeug (1) nach einem der vorhergehenden Ansprüche,
**dadurch gekennzeichnet, dass** der Haltegriff (11)
- in der Nichtgebrauchsstellung unterhalb des Ladebodens (3) angeordnet ist,
- über eine am Fahrzeugaufbau (2) angeordnete Führungsstruktur ausziehbar ist und
- durch Ausziehen über die Grundfläche des Ladebodens (3) hinaus und durch Schwenken nach oben um eine Schwenkachse sowie Befestigung an der Fahrzeugaufbau-Befestigungsstruktur (12) in die Gebrauchsstellung überführbar ist.

8. Fahrzeug (1) nach Anspruch 7,
**dadurch gekennzeichnet, dass** die Schwenkachse mittels eines Schwenklagers gebildet ist, welches im Bereich eines dem Fahrzeugaufbau (2) zugewandten Endes des Haltegriffs (11) zwischen diesem und einem Ende der Führungsstruktur, wenn der Haltegriff (11) eine maximale Auszugsstellung aus der Führungsstruktur erreicht hat, ausgebildet ist.

9. Fahrzeug (1) nach einem der Ansprüche 1 bis 6,
**dadurch gekennzeichnet, dass** die zumindest eine Leiter (9) eine Ausziehleiter ist, welche
- in ihrer Nichtgebrauchsstellung in einer unterhalb des Ladebodens (3) befindlichen Aufbewahrungsstellung angeordnet ist,
- über eine am Fahrzeugaufbau (2) angeordnete Leiter-Führungsstruktur (10) ausziehbar ist und
- durch Ausziehen aus der Aufbewahrungsstellung über eine Grundfläche des Ladebodens (3) hinaus und Abklappen in die Gebrauchsstellung überführbar ist.

10. Fahrzeug (1) nach Anspruch 9,
**dadurch gekennzeichnet, dass** der Haltegriff (11) schwenkbar an der Ausziehleiter befestigt ist und
- in der Nichtgebrauchsstellung unterhalb des Ladebodens (3) angeordnet ist und
- durch Ausziehen mit der Ausziehleiter über die Grundfläche des Ladebodens (3) hinaus und durch Schwenken nach oben um eine Schwenkachse (S) sowie Befestigung an der Fahrzeugaufbau-Befestigungsstruktur (12) in die Gebrauchsstellung überführbar ist.

11. Fahrzeug (1) nach Anspruch 10,
**dadurch gekennzeichnet, dass** die Fahrzeugaufbau-Befestigungsstruktur (12) an der Ausziehleiter angeordnet ist.

12. Fahrzeug (1) nach einem der vorhergehenden Ansprüche,
**dadurch gekennzeichnet, dass** der Haltegriff (11) einen stangenförmigen Griffabschnitt (11.2) umfasst.

13. Fahrzeug (1) nach Anspruch 12,
**dadurch gekennzeichnet, dass** der Griffabschnitt (11.2) in der Gebrauchsstellung des Haltegriffs (11) zumindest im Wesentlichen senkrecht zum Ladeboden (3) verläuft.

14. Fahrzeug (1) nach einem der vorhergehenden Ansprüche,
**dadurch gekennzeichnet, dass** der Einstiegsbereich in einer Öffnung (O) des Fahrzeugaufbaus (2) ausgebildet ist, welche mit zumindest einer Plane und/oder einer Fahrzeugtür (7, 8) und/oder einem Rolltor des Fahrzeugaufbaus (2) verschließbar ist.

15. Fahrzeug (1) nach einem der vorhergehenden Ansprüche,
**dadurch gekennzeichnet, dass** der Fahrzeugaufbau (2) einen
- Planenaufbau und/oder,
- Kofferaufbau und/oder
- Kühlaufbau
umfasst.
